# EUROPEAN PATENT APPLICATION

(11) **EP 4 837 684 A1**
(43) Date of publication of application: **11.11.2026**
(21) Application number: 26174039.3
(22) Date of filing: 22.04.2026
(51) Int. Cl.: B23K 9/095, B23K 9/10, G06F 3/0481

(54) **SYSTEMS AND METHODS TO PROVIDE VISUAL ASSISTANCE FOR SELECTION OF WELDING PARAMETERS**

(30) Priority: 30.04.2025 US 202563797323 P; 15.04.2026 US 202619648782
(71) Applicant: Illinois Tool Works Inc., Glenview IL 60025 (US)
(72) Inventor: ALBRECHT, Jack, Glenview, 60025 (US); RODRIGUEZ, Robert, Glenview, 60025 (US)
(74) Representative: HGF

(57) **Abstract**

Disclosed example welding-type systems include: power conversion circuitry configured to convert input power to welding-type power; an interface configured to receive a selection of a value for a parameter of a plurality of parameters; and control circuitry configured to: in response to the selection of the value of the parameter via the interface, control the interface to output a visual indication of an effect of the value of the parameter on one or more of arc length, electrode length, bead width, bead depth, penetration depth, or penetration width, the visual indication further based on a joint type, and the visual indication including different visual effects for each of the arc, the bead, and the penetration; and control the power conversion circuitry based on values of the plurality of parameters.

## Description

### RELATED APPLICATIONS

The present application claims the benefit of U.S. Provisional Patent Application Serial No. 63/797,323, filed April 30, 2025, entitled "SYSTEMS AND METHODS TO PROVIDE VISUAL ASSISTANCE FOR SELECTION OF WELDING PARAMETERS." The entirety of U.S. Provisional Patent Application Serial No. 63/797,323 is expressly incorporated herein by reference.

### FIELD OF THE DISCLOSURE

This disclosure relates generally to user interfaces for welding-type systems and, more particularly, to systems and methods to provide visual assistance for selection of welding parameters.

### BACKGROUND

Many welding systems provide a user interface to allow the user to select welding parameters. Some welding systems provide suggested parameter values based on characteristics of the weld to be performed, such as material thickness. However, the ability to consistently properly set welding parameters typically requires extensive welding experience, and novice or inexperienced users may not have such experience.

### SUMMARY

Systems and methods to provide visual assistance for selection of welding parameters are disclosed, substantially as illustrated by and described in connection with at least one of the figures, as set forth more completely in the claims.

### BRIEF DESCRIPTION OF THE DRAWINGS

FIG. 1 is a schematic diagram of an example welding system including a welding-type power supply configured to output welding-type power, in accordance with aspects of this disclosure.
FIG. 2A is an example user interface that may implement the user interface of FIG. 1 to enable an operator to adjust one or more parameters of a welding-type output, and/or to output a visual indication of the effects of the selected parameter and/or selected value on a welding arc profile, a welding bead profile, and/or a penetration profile, based on a selected process type and/or a selected joint type.
FIG. 2B illustrates the example user interface of FIG. 2A illustrating an updated visual representation in response to an increase in a wire feed speed parameter.
FIG. 2C illustrates the example user interface of FIG. 2A illustrating an updated visual representation in response to a decrease in a wire feed speed parameter.
FIG. 2D illustrates the example user interface of FIG. 2A illustrating an updated visual representation in response to an increase in a voltage parameter.
FIG. 2E illustrates the example user interface of FIG. 2A illustrating an updated visual representation in response to a decrease in a voltage parameter.
FIGS. 2F-2J illustrate example collections of graphics that may be displayed on the user interface of FIG. 2A for different selected weld joints for a GMAW welding process, in response to higher, nominal, and lower values for wire feed speed and voltage parameters.
FIGS. 3A-3E illustrate example collections of graphics that may be displayed on the user interface of FIG. 2A for different selected weld joints for a pulsed GMAW welding process, in response to higher, nominal, and lower values for wire feed speed and arc length parameters.
FIGS. 4A-4E illustrate example collections of graphics that may be displayed on the user interface of FIG. 2A for different selected weld joints for a stick welding process, in response to higher, nominal, and lower values for a current parameter.
FIGS. 5A-5E illustrate example collections of graphics that may be displayed on the user interface of FIG. 2A for different selected weld joints during a GTAW welding process, in response to higher, nominal, and lower values for current and pulse frequency parameters.
FIG. 6 is a flowchart illustrating example machine readable instructions which may be executed by the welding-type power supply of FIG. 1 to output a visual indication of the effects of the selected parameter and/or selected value.

The figures are not to scale. Where appropriate, the same or similar reference numerals are used in the figures to refer to similar or identical elements.

### DETAILED DESCRIPTION

Conventional welding-type power supplies enable operators to select the welding parameters within the capabilities of the welding-type power supply. However, in many instances users do not understand how to set welding parameters at the most appropriate values for a given welding task. While some conventional welding-type power supplies provide suggested parameters based on known information about the workpiece and/or the process (e.g., workpiece thickness, workpiece material, wire type, wire size, gas type, etc.), the user may still lack an understanding of the effects of changing suggested parameters, or how to improve on the parameters suggested by the interface where appropriate.

Disclosed example systems and methods provide visualizations of the effects of the different parameters on the weld and/or welding zone, such as the welding arc, the welding bead, and/or penetration profile, which improves the ability for welders to successfully weld (e.g., reduce or minimize defects, improve weld strength). While conventional welding interfaces illustrate effects of certain weld parameters on the weld penetration or weld bead shape, there are several other characteristics taken into account by disclosed systems and methods to further improve the operator's understanding of welding parameters. Disclosed example systems and methods display visual indications of effect(s) of changing welding parameter(s) on one or more of arc length, electrode length, bead width, bead depth, penetration depth, and/or penetration width. In some such examples, disclosed example systems and methods provide multiple sequential graphics in response to multiple incremental changes in a parameter value, which provides the visual impression of an animation that illustrates the cumulative effects of changes in the parameter on the welding arc, bead profile, and/or penetration profile. While the graphics may be, within the scope of this disclosure, specifically calculated and illustrated to scale based on empirical observation, disclosed example systems and methods may provide illustrative, educational, and/or non-scale graphics showing effects of changes to the parameters.

According to aspects of this disclosure, example welding-type systems include: power conversion circuitry configured to convert input power to welding-type power; an interface configured to receive a selection of a value for a parameter of a plurality of parameters; and control circuitry configured to: in response to the selection of the value of the parameter via the interface, control the interface to output a visual indication of an effect of the value of the parameter on one or more of arc length, electrode length, bead width, bead depth, penetration depth, or penetration width, the visual indication further based on a joint type, and the visual indication including different visual effects for each of the arc, the bead, and the penetration; and control the power conversion circuitry based on values of the plurality of parameters.

In some example welding-type systems, the interface is configured to receive a selection of welding processes from at least a wire-fed process, a pulsed wire-fed process, a stick welding process, or a tungsten electrode process.

In some example welding-type systems, the interface is configured to set the plurality of parameters to include voltage and wire feed speed in response to selection of the wire-fed process via the interface. In some example welding-type systems, the control circuitry is configured to control the interface to output the visual indication of the effect of the value of the voltage on at least arc length, bead height, and bead concavity. In some example welding-type systems, the control circuitry is configured to control the interface to output the visual indication of the effect of the value of the wire feed speed on at least the penetration depth.

In some example welding-type systems, the interface is configured to set the plurality of parameters to include arc length and wire feed speed in response to selection of the pulsed wire-fed process via the interface. In some example welding-type systems, the control circuitry is configured to control the interface to output the visual indication of the effect of the value of the arc length on at least arc length and electrode length. In some example welding-type systems, the control circuitry is configured to control the interface to output the visual indication of the effect of the value of the wire feed speed on at least the bead depth and the penetration depth.

In some example welding-type systems, the interface is configured to set the plurality of parameters to include current in response to selection of the stick welding process via the interface. In some example welding-type systems, the control circuitry is configured to control the interface to output the visual indication of the effect of the value of the current on at least a bead concavity, the bead depth, and the penetration depth.

In some example welding-type systems, the interface is configured to set the plurality of parameters to include current and pulse frequency in response to selection of the tungsten electrode process. In some example welding-type systems, the control circuitry is configured to control the interface to output the visual indication of the effect of the value of the current on at least the penetration depth and the bead width. In some example welding-type systems, the control circuitry is configured to control the interface to output the visual indication of the effect of the value of the pulse frequency on at least penetration shape.

In some example welding-type systems, the visual indication includes a graphic. In some example welding-type systems, the visual indication includes text. In some example welding-type systems, the interface is configured to receive a change in the value for the parameter, and the control circuitry is configured to control the interface to output the visual indication of the effect based on the change in the value of the parameter.

According to some aspects of this disclosure, example welding interfaces include: a display; one or more input devices configured to: receive a selection of a value for a parameter from a plurality of parameters; and control circuitry configured to: in response to the selection of the value via the one or more input devices, control the display to output a visual indication of an effect of the value of the parameter on one or more of arc length, electrode length, bead width, bead depth, penetration depth, or penetration width, the visual indication further based on a joint type.

In some example welding interfaces, the one or more input devices are configured to receive a selection of welding processes from at least a wire-fed process, a pulsed wire-fed process, a stick welding process, or a tungsten electrode process. In some example welding interfaces, the visual indication comprises a graphic. In some example welding interfaces, the one or more input devices are configured to receive a change in the value for the parameter, and the control circuitry is configured to control the display to output the visual indication of the effect based on the change in the value of the parameter.

As used herein, "amperage" refers to an amount of welding-type current, and may include an instantaneous current, an average current, an RMS current, a peak current, an electrode negative (EN) current, and/or an electrode positive (EP) current.

As used herein, "power conversion circuitry" and/or "power conversion circuits" refer to circuitry and/or electrical components that convert electrical power from one or more first forms (e.g., power output by a generator) to one or more second forms having any combination of voltage, current, frequency, and/or response characteristics. The power conversion circuitry may include power limiting circuitry, output selection circuitry, measurement and/or control circuitry, and/or any other circuits to provide appropriate features.

As used herein, the terms "first" and "second" may be used to enumerate different components or elements of the same type, and do not necessarily imply any particular order. For example, while in some examples a first time occurs prior to a second time within a time period, the terms "first time" and "second time" do not imply any specific order in which the first or second times occur relative to the other within the time period.

The term "welding-type system," as used herein, includes any device capable of supplying power suitable for welding, plasma cutting, induction heating, Carbon Arc Cutting-Air (e.g., CAC-A) and/or hot wire welding/preheating (including laser welding and laser cladding), including inverters, converters, choppers, resonant power supplies, quasi-resonant power supplies, etc., as well as control circuitry and other ancillary circuitry associated therewith.

As used herein, the term "welding-type power" refers to power suitable for welding, plasma cutting, induction heating, CAC-A and/or hot wire welding/preheating (including laser welding and laser cladding). As used herein, the term "welding-type power supply" and/or "power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, a "circuit," or "circuitry," includes any analog and/or digital components, power and/or control elements, such as a microprocessor, digital signal processor (DSP), software, and the like, discrete and/or integrated components, or portions and/or combinations thereof.

The terms "control circuit," "control circuitry," and/or "controller," as used herein, may include digital and/or analog circuitry, discrete and/or integrated circuitry, microprocessors, digital signal processors (DSPs), and/or other logic circuitry, and/or associated software, hardware, and/or firmware. Control circuits or control circuitry may be located on one or more circuit boards that form part or all of a controller, and are used to control a welding process, a device such as a power source or wire feeder, and/or any other type of welding-related system.

As used herein, the term "memory" includes volatile and non-volatile memory devices and/or other storage device.

As used herein, the term "torch," "welding torch," "welding tool" or "welding-type tool" refers to a device configured to be manipulated to perform a welding-related task, and can include a hand-held welding torch, robotic welding torch, gun, gouging tool, cutting tool, or other device used to create the welding arc.

As used herein, the term "welding mode," "welding process," "welding-type process" or "welding operation" refers to the type of process or output used, such as current-controlled (CC), voltage-controlled (CV), pulsed, gas metal arc welding (GMAW), flux-cored arc welding (FCAW), gas tungsten arc welding (GTAW, e.g., TIG), shielded metal arc welding (SMAW), spray, short circuit, CAC-A, gouging process, cutting process, and/or any other type of welding process.

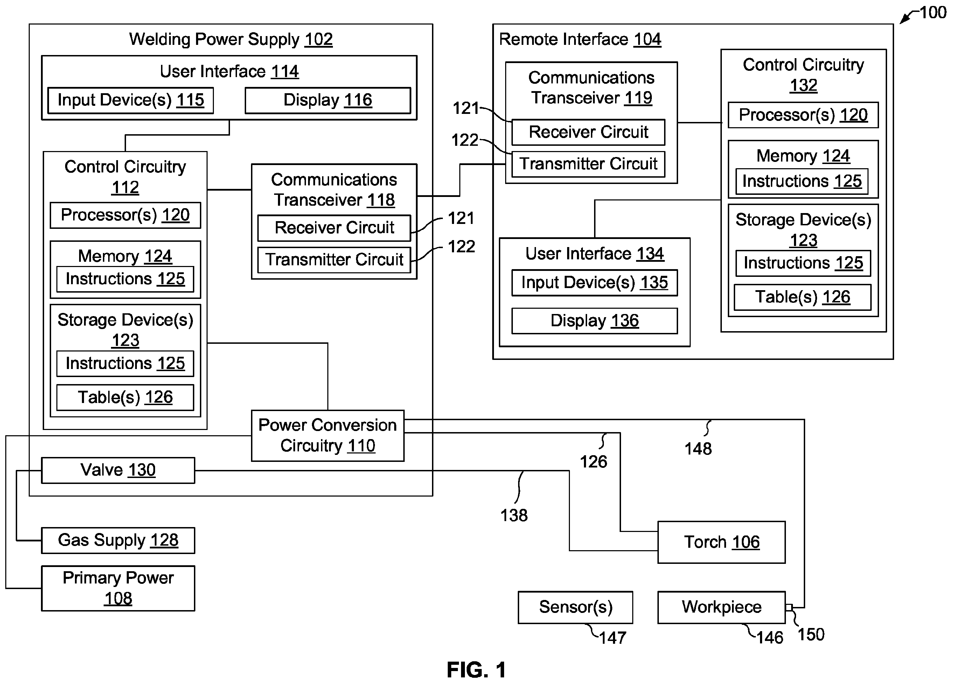

Turning now to the drawings, FIG. 1 is a block diagram of an example welding system 100 having a welding-type power supply 102, a remote interface 104, and a welding torch 106. The welding system 100 powers, controls, and/or supplies consumables to a welding application. In the example of FIG. 1, the power supply 102 directly supplies welding-type output power to the welding torch 106. The welding torch 106 is configured for one or more of wire-fed processes (e.g., GMAW, FCAW), modified wire-fed processes (e.g., pulsed GMAW or FCAW, modified short circuit GMAW or FCAW), stick or shielded metal arc welding (SMAW), tungsten electrode processes (e.g., gas tungsten arc welding (GTAW), pulsed GTAW, AC GTAW), which may be used to perform welding processes involving DC welding-type current, pulsed DC welding-type current waveforms, and/or AC waveforms. Example DC pulse waveforms that may be output by the power supply 102 have a peak phase at a peak current and a background phase at a background current, and one pulse cycle includes one peak phase and one background phase.

The power supply 102 receives primary power 108 (e.g., from the AC power grid, an engine/generator set, a battery, or other energy generating or storage devices, or a combination thereof), conditions the primary power, and provides an output power to one or more welding devices in accordance with demands of the system 100. The primary power 108 may be supplied from an offsite location (e.g., the primary power may originate from the power grid). The power supply 102 includes power conversion circuitry 110, which may include transformers, rectifiers, switches, and so forth, capable of converting the AC input power to AC and/or DC output power as dictated by the demands of the system 100 (e.g., particular welding processes and regimes). The power conversion circuitry 110 converts input power (e.g., the primary power 108) to welding-type power based on a target amperage (e.g., a weld current setpoint) and outputs the welding-type power via a weld circuit.

The power supply 102 includes control circuitry 112 to control the operation of the power supply 102. The power supply 102 also includes a user interface 114. The control circuitry 112 receives input from the user interface 114, through which a user may choose a process and/or input desired parameters (e.g., a voltage or arc length, a current, a wire feed speed, a pulse frequency, pulse peak current time, a pulse peak current percentage, a pulse background current time, a pulse background current percentage, an AC waveform type, an AC balance, a weld circuit inductance, etc.). The user interface 114 may receive inputs using one or more input devices 115, such as via a keypad, keyboard, physical buttons, switches, knobs, a mouse, a keyboard, a keypad, a touch screen (e.g., software buttons), a voice activation system, a wireless device, etc. Furthermore, the control circuitry 112 controls operating parameters based on input by the user as well as based on other current operating parameters. Specifically, the user interface 114 may include a display 116 for presenting, showing, or indicating, information to an operator.

Similarly, the example remote interface 104 may include a user interface 134 having one or more input device(s) 135 and a display 136. The user interface 134, the input device(s) 135, and/or the display 136 may be similar, identical, or different than the user interface 114, the input device(s) 115, and/or the display 116.

The control circuitry 112 may also include interface circuitry for communicating data to other devices in the system 100, such as the remote interface 104. For example, in some situations, the power supply 102 wirelessly communicates with the remote interface 104. Further, in some situations, the power supply 102 communicates with the remote interface 104 using a wired connection, such as by using a network interface controller (NIC) to communicate data via a network (e.g., ETHERNET, 10baseT, 10base100, etc.), and/or. In some examples, the control circuitry 112 communicates with the remote interface 104 via the weld circuit.

The control circuitry 112 includes at least one controller or processor 120 that controls the operations of the power supply 102. The control circuitry 112 receives and processes multiple inputs associated with the performance and demands of the system 100. The processor 120 may include one or more microprocessors, such as one or more "general-purpose" microprocessors, one or more special-purpose microprocessors and/or ASICS, and/or any other type of processing device. For example, the processor 120 may include one or more digital signal processors (DSPs).

The example control circuitry 112 includes one or more storage device(s) 123 and one or more memory device(s) 124. The storage device(s) 123 (e.g., nonvolatile storage) may include ROM, flash memory, a hard drive, and/or any other suitable optical, magnetic, and/or solid-state storage medium, and/or a combination thereof. The storage device 123 stores data (e.g., data corresponding to a welding application), instructions (e.g., software or firmware to perform welding processes), and/or any other appropriate data. Examples of stored data for a welding application include predetermined relationships between 1) parameter values and/or combinations of parameter values, and 2) effects on a welding arc, a bead profile, and/or a penetration profile, and/or other effects, such as one or more look up tables, as described in more detail below.

The memory device 124 may include a volatile memory, such as random access memory (RAM), and/or a nonvolatile memory, such as read-only memory (ROM). The memory device 124 and/or the storage device(s) 123 may store a variety of information and may be used for various purposes. For example, the memory device 124 and/or the storage device(s) 123 may store processor executable instructions 125 (e.g., firmware or software) for the processor 120 to execute. In addition, one or more control regimes for various welding processes, along with associated settings and parameters, may be stored in the storage device 123 and/or memory device 124.

In some examples, a gas supply 128 provides shielding gases, such as argon, helium, carbon dioxide, and so forth, depending upon the welding application. The shielding gas flows to a valve 130, which controls the flow of gas, and if desired, may be selected to allow for modulating or regulating the amount of gas supplied to a welding application. The valve 130 may be opened, closed, or otherwise operated by the control circuitry 112 to enable, inhibit, or control gas flow (e.g., shielding gas) through the valve 130. Shielding gas exits the valve 130 and flows through a cable 138 (which in some implementations may be packaged with the welding power output) to the welding torch 106, which provides the shielding gas to the welding application. In some examples, the welding system 100 does not include the gas supply 128, the valve 130, and/or the cable 138.

In the example of FIG. 1, the power supply 102 includes a communications transceiver 118, and the remote interface 104 includes a communications transceiver 119. The communications transceivers 118, 119 each include a corresponding receiver circuit 121 and a corresponding transmitter circuit 122. The example communications transceivers 118, 119 enable the remote interface 104 to transmit commands to the power supply 102 and/or receive information from the power supply 102. Example commands may include commands to set parameters and/or otherwise configure the power supply 102. The remote interface 104 may receive information about the configuration of the power supply 102.

The remote interface 104 further includes control circuitry 132, which may include one or more processor(s) 120, one or more storage device(s) 123, and/or memory 124, and/or may store and execute machine readable instructions 125. The control circuitry 132, the processor(s) 120, the storage device(s) 123, and/or the memory 124 may be similar, identical, or different than the control circuitry 112, the processor(s) 120, the storage device(s) 123, and/or the memory 124 of the power supply 102.

The welding torch 106 delivers the welding power and/or shielding gas for a welding application. The welding torch 106 is used to establish a welding arc between the welding torch 106 and a workpiece 146. A welding cable 140 couples the torch 106 to the power conversion circuitry 110 to conduct current to the torch 106. A work cable 148 couples the workpiece 146 to the power supply 102 (e.g., to the power conversion circuitry 110) to provide a return path for the weld current (e.g., as part of the weld circuit). The example work cable 148 is attachable and/or detachable from the power supply 102 for ease of replacement of the work cable 148. The work cable 148 may be terminated with a clamp 150 (or another power connecting device), which couples the power supply 102 to the workpiece 146.

In some examples, one or more sensors 147 are included with or connected to the welding torch 106 to monitor one or more welding parameters (e.g., power, voltage, current, inductance, impedance, etc.) to inform the control circuitry 132 and/or 112 during the welding process.

To aid a weld operator in configuring the welding-type power supply 102 appropriately (e.g., welding parameters) for a selected welding process and joint type, the example storage device(s) 123 may store tables 126 or other data representative of relationships between parameters and/or effects on a welding arc, a bead profile, a penetration profile 220, and/or other effects. The example tables 126 may be populated based on empirical testing using different combinations of welding parameters.

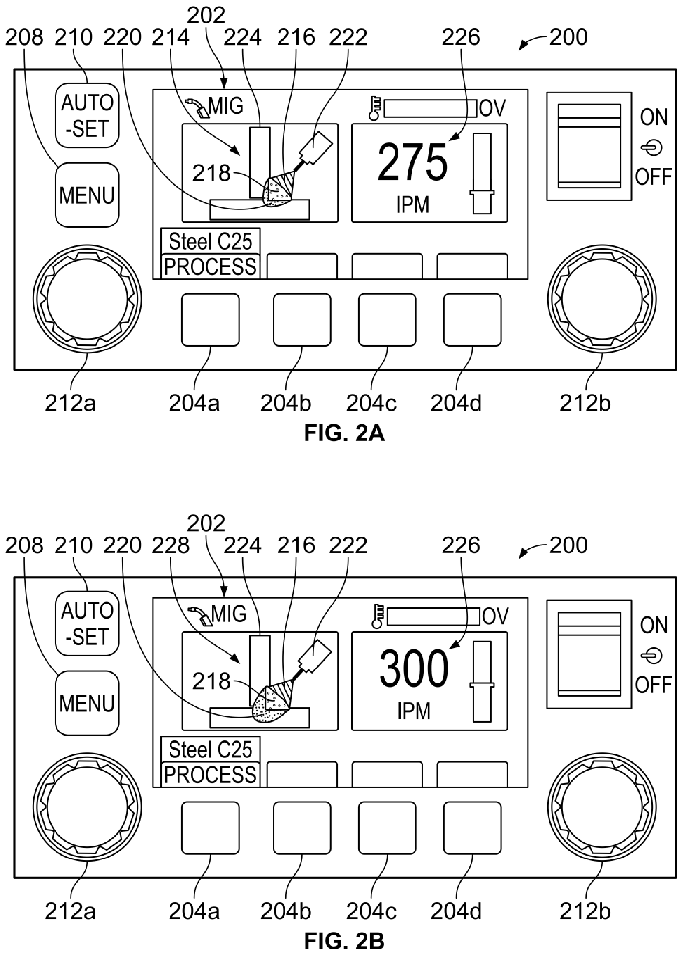

FIG. 2A is an example user interface 200 that may implement the user interface 114, 134 of FIG. 1 to enable an operator to adjust one or more parameters of a welding-type output waveform, and/or to output a visual indication of an effect of the value of the parameter on one or more of arc length, electrode length, bead width, bead depth, penetration depth, or penetration width, in which the visual indication is based on a the welding process and/or the joint type selected by the operator.

The example user interface 200 of FIGS. 2A and 2B includes a display 202, input buttons 204a-204d, switch 206, input buttons, 208, 210, and input knobs 212a, 212b. The example buttons 204a-204d, 206, 208, 210, and the input knobs 212a, 212b may implement the input devices 115, 135 of FIG. 1.

The example buttons 204a-204d enable an operator to select one or more weld parameters for adjustment or recall (e.g., by recalling a weld schedule or stored set of parameters). Once a parameter is selected, one or both of the example knobs 212a, 212b receive inputs to change the value of the parameter, such as by increasing (e.g., incrementing) or decreasing (e.g., decrementing) a value of a parameter and/or selecting between discrete values of a parameter. For example, an operator may turn the knob 212a, 212b to select an AC waveform or a DC pulse process, to change a welding voltage, a wire feed speed, a welding amperage, an AC balance, and/or to any other parameters. In the illustrated example, each of the example knobs 212a, 212b may have default or dedicated parameters that are adjusted when the knob 212a, 212b is turned. For example, for a GMAW process, the knob 212a may default to changing an output voltage, while the knob 212b may default to changing a wire feed speed.

The example interface 200 may include an on/off switch 206 to power on the power supply 102 and/or the remote interface 104.

The knobs 212a, 212b may be selected to confirm a selected parameter. The button 208 enables navigation, such as by canceling a parameter change and/or reverting to a prior menu.

The example button 210 may be selected to enable or disable an automatic configuration mode, in which the control circuitry 112, 132 automatically configures one or more parameters in response to changes in one or more other parameters. For example, when the automatic configuration mode is selected, the control circuitry 112, 132 may respond to changes in a voltage parameter (e.g., received via the knob 212a, 212b) with corresponding changes to a wire feed speed parameter for wire fed processes. The operator may be permitted to change the parameter from the automatically configured value, or may be prevented from making changes to an automatically configured value without disabling the automatic configuration mode.

In the example of FIG. 2A, the display 202 presents a visual indication, such as a graphic 214, that indicates an effect of the selected parameter and/or the selected value of a parameter on a welding arc, on a bead profile, and/or on a penetration profile. In the example interface 200, the illustrated graphic 214 includes different visual effects to visually differentiate each of the welding arc 216, the bead profile 218, and the penetration profile 220. For example, the welding arc 216 is shown in blue, the bead profile 218 is shown in orange, and the penetration profile 220 is shown in red.

The display 202 may present the selected graphic in response to a change in the value of the selected parameter (e.g., via the knob 212a, 212b). For example, for each incremental change in the parameter made using the knob 212a, 212b, the display 202 may briefly display a corresponding graphic showing the incremental change in the welding arc 216, the bead profile 218, and the penetration profile 220. A turn of the knob 212a, 212b through multiple increments may therefore result in displaying multiple graphics in sequence, thereby having the effect of animating changes in the welding arc 216, the bead profile 218, and the penetration profile 220 based on increases or decreases to the value of the parameter.

Each of the welding arc 216, the bead profile 218, and the penetration profile 220 may be illustrated based on different aspects. Example aspects of the welding arc 216 may include an arc width, an arc length, and/or an electrode extension length (electrode extension length is not part of the arc but may be influenced by the arc profile). Example aspects of the bead profile 218 include bead width, bead height, and/or convexity/concavity. Example aspects of the penetration profile 220 may include penetration depth, penetration width, and/or penetration shape. The example graphic 214 further illustrates a torch 222 having a type based on the selected process, and a weld joint 224 having a shape (based on the selected joint type). In some examples, the graphic 214 may illustrate the joint, the torch, the welding arc 216, the bead profile 218, and/or the penetration profile 220 at different orientations based on the selected weld position.

The example interface 200 further includes an indicator 226 to show the selected parameter (e.g., wire feed speed, in inches per minute (IPM)) and the selected value (e.g., 275 IPM). The indicator 226 may be updated to reflect different selected parameters and values.

Example parameters that may affect the welding arc 216, the bead profile 218, and/or the penetration profile 220 include, without limitation: a welding mode, a welding polarity, welding voltage, arc length, a wire feed speed setting a tungsten electrode diameter, a tungsten electrode stickout length, a gas cup size, a shielding gas flow rate, a torch angle, an amperage setting, an AC balance, an AC frequency, a mixed AC-DC welding ratio, an AC waveshape, an AC commutation level, an EN amperage of an AC waveform, an EP amperage of the AC waveform, an amperage ratio of an AC waveform, a pulse frequency, a pulse peak phase time, a pulse background phase amperage, a pulse background percentage of a pulse cycle, a pulse waveform, a pulse transition rate, a pulse-on-pulse setting, and/or a pulse-on-pulse ratio. In some examples, such as applications involving robotic control of the welding torch, additional parameters that may be considered include a workpiece material, a workpiece thickness, a travel speed, a weave pattern, a travel angle, a work angle, a tungsten to work distance, a wire preheating power, a wire preheating voltage, a wire preheating current, a wire preheating enthalpy, a wire oscillation speed, a wire oscillation pattern, a wire feed location relative to a weld puddle, or a wire feed orientation relative to the weld puddle.

When determining the visual indication, the control circuitry 112, 132 may use the parameter value by itself and/or in combination with the value(s) of one or more other parameters. Because of the dynamic nature of welding, the visual representation may be a relative representation, rather than illustrating the exact arc profile, bead profile, and/or penetration profile. To this end, the example control circuitry 112, 132 responds to changes in a parameter by displaying different corresponding graphics having incrementally different profiles for ones of the arc profile, the bead profile, and/or the penetration profile that are affected by a given change in a parameter. While example graphics showing visually distinguishable profiles are used for explanation herein, a higher number of graphics may be used to show more gradually changing profiles corresponding to a larger number of increments in the parameter profile.

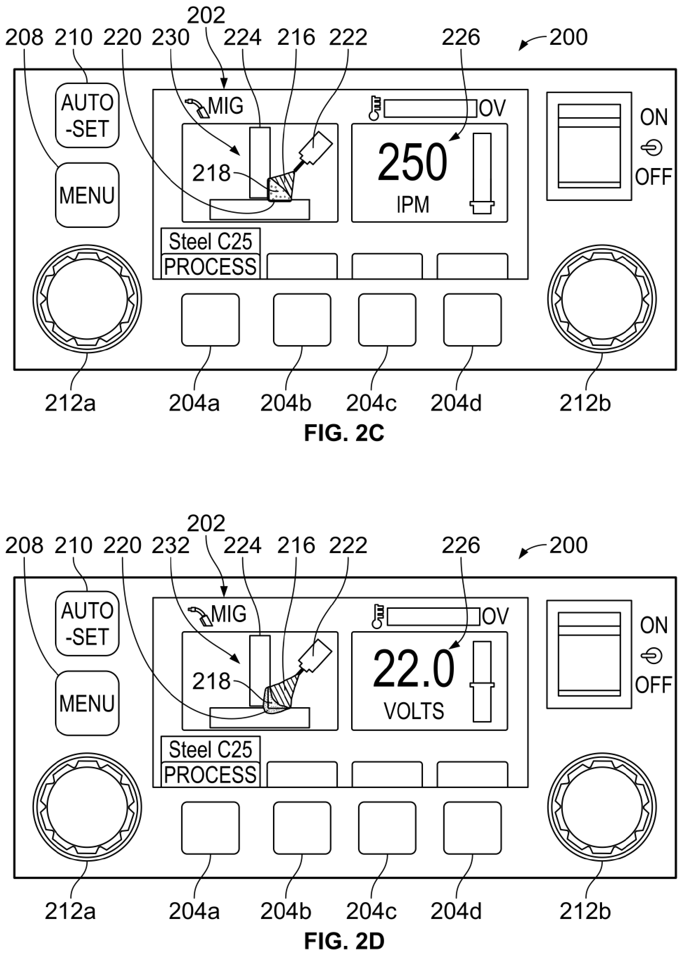

In the example interface 200 shown in FIG. 2A, the graphic 214 illustrates the welding arc 216, the bead profile 218, and the penetration profile 220 for a nominal value of wire feed speed and a nominal value of voltage for a wire fed process (e.g., GMAW, FCAW). FIG. 2B displays an updated graphic 228 on the interface, having updated profiles for the welding arc 216, the bead profile 218, and the penetration profile 220 for an increased value of the wire feed speed (relative to the nominal value of FIG. 2A) and a nominal value of voltage for the wire fed process. Conversely, FIG. 2C displays an updated graphic 230 on the interface, having updated profiles for the welding arc 216, the bead profile 218, and the penetration profile 220 for a decreased value of the wire feed speed (relative to the nominal value of FIG. 2A) and a nominal value of voltage for the wire fed process.

In some examples, the interface 200 may present warnings or informational notices based on comparing the welding arc 216, the bead profile 218, and/or the penetration profile 220 to workpiece characteristics. For example, the interface 200 may display a warning if the penetration profile 220 and the selected workpiece thickness have at least a threshold likelihood of resulting in burn-through during welding.

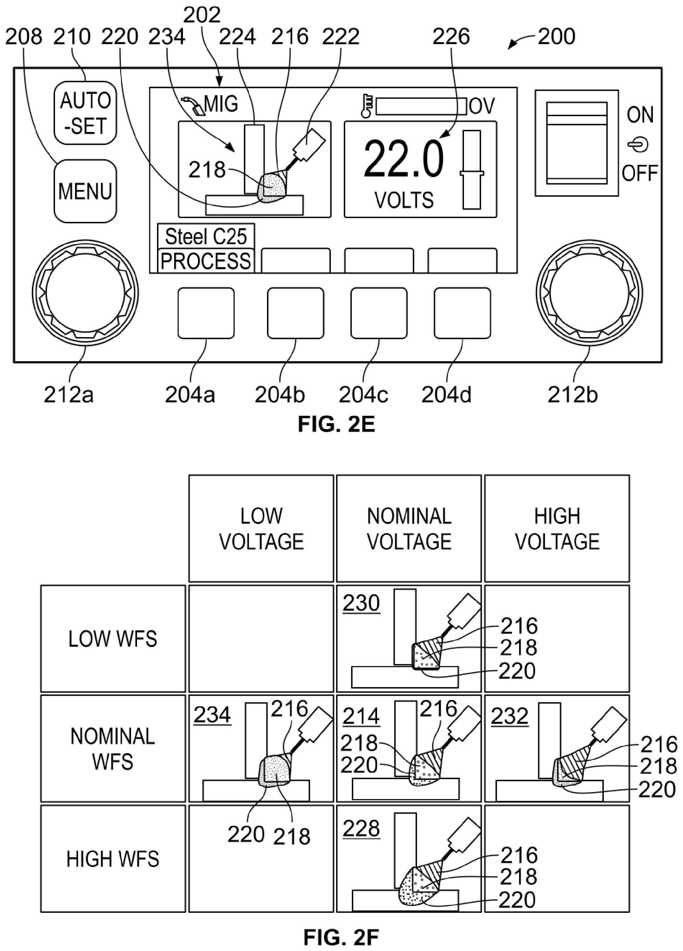

FIG. 2D displays an updated graphic 232 on the interface, having updated profiles for the welding arc 216, the bead profile 218, and the penetration profile 220 for a nominal value of the wire feed speed and an increased value of voltage (relative to the nominal value of FIG. 2A) for the wire fed process. Conversely, FIG. 2E displays an updated graphic 234 on the interface, having updated profiles for the welding arc 216, the bead profile 218, and the penetration profile 220 for a nominal value of the wire feed speed and an increased value of voltage (relative to the nominal value of FIG. 2A) for the wire fed process.

In addition to the graphic 214, the example display 202 may also display the selected value of the parameter alphanumerically, and/or may display information to guide the operator to make changes to the selected value (e.g., increase parameter for thinner materials, decrease parameter for thicker materials).

FIG. 2F illustrates the example graphics 214 and 228-234 that may be output by the example interface 200 of FIG. 2A to output visual indications of effects of the values of example voltage and wire feed speed parameters on a welding arc 216 (e.g., arc length, electrode length), a bead profile 218 (e.g., bead width, bead depth, bead concavity/convexity), and/or penetration profile 220 (e.g., penetration depth, penetration width), for a T-joint type of welding joint and a wire feed welding process (e.g., GMAW, FCAW).

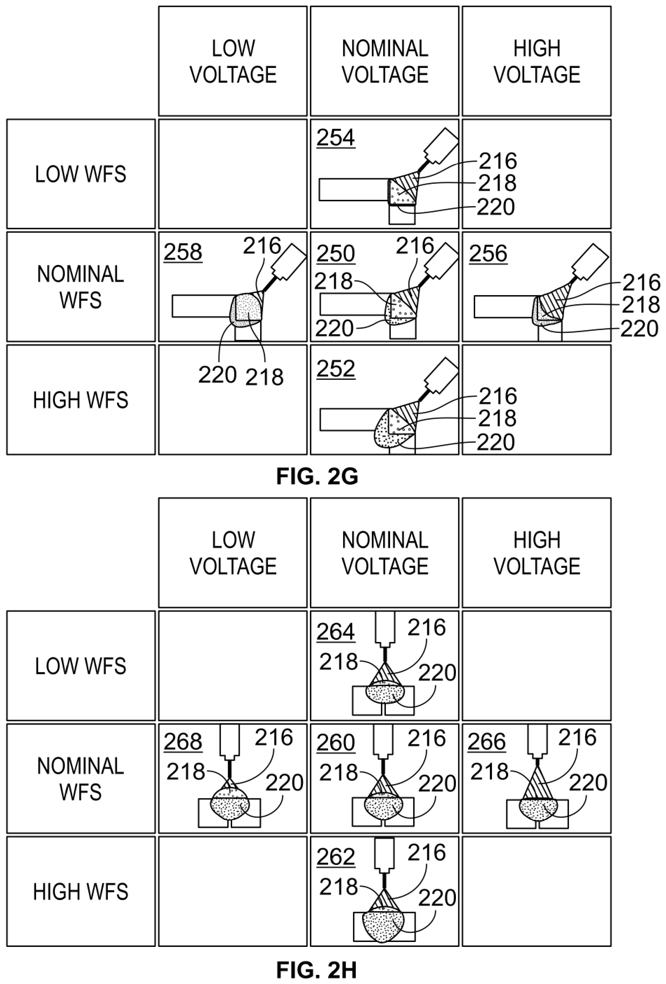

FIG. 2G illustrates example graphics 250-258 that may be output by the example interface 200 of FIG. 2A to output visual indications of effects of the values of example voltage and wire feed speed parameters on a welding arc 216 (e.g., arc length, electrode length), a bead profile 218 (e.g., bead width, bead depth, bead concavity/convexity), and/or penetration profile 220 (e.g., penetration depth, penetration width), for a corner type of welding joint and a wire fed welding process (e.g., GMAW, FCAW). The graphics 250-258 illustrate the welding arc 216, the bead profile 218, and the penetration profile 220 at a nominal voltage and nominal wire feed speed (graphic 250), a higher wire feed speed and a nominal voltage (graphic 252), a lower wire feed speed and a nominal voltage (graphic 254), a nominal wire feed speed and a higher voltage (graphic 256), and a nominal wire feed speed and a lower voltage (graphic 258).

FIG. 2H illustrates example graphics 260-268 that may be output by the example interface 200 of FIG. 2A to output visual indications of effects of the values of example voltage and wire feed speed parameters on a welding arc 216 (e.g., arc length, electrode length), a bead profile 218 (e.g., bead width, bead depth, bead concavity/convexity), and/or penetration profile 220 (e.g., penetration depth, penetration width), for an edge type of welding joint and a wire fed welding process (e.g., GMAW, FCAW). The graphics 260-268 illustrate the welding arc 216, the bead profile 218, and the penetration profile 220 at a nominal voltage and nominal wire feed speed (graphic 260), a higher wire feed speed and a nominal voltage (graphic 262), a lower wire feed speed and a nominal voltage (graphic 264), a nominal wire feed speed and a higher voltage (graphic 266), and a nominal wire feed speed and a lower voltage (graphic 268).

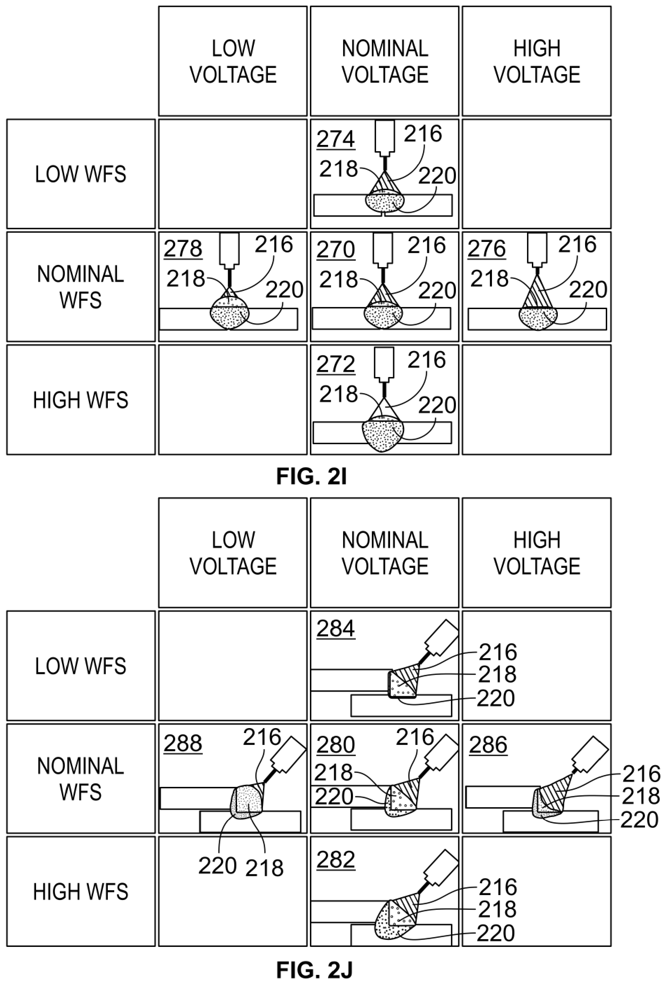

FIG. 2I illustrates example graphics 270-278 that may be output by the example interface 200 of FIG. 2A to output visual indications of effects of the values of example voltage and wire feed speed parameters on a welding arc 216 (e.g., arc length, electrode length), a bead profile 218 (e.g., bead width, bead depth, bead concavity/convexity), and/or penetration profile 220 (e.g., penetration depth, penetration width), for a butt type of welding joint and a wire fed welding process (e.g., GMAW, FCAW). The graphics 270-278 illustrate the welding arc 216, the bead profile 218, and the penetration profile 220 at a nominal voltage and nominal wire feed speed (graphic 270), a higher wire feed speed and a nominal voltage (graphic 272), a lower wire feed speed and a nominal voltage (graphic 274), a nominal wire feed speed and a higher voltage (graphic 276), and a nominal wire feed speed and a lower voltage (graphic 278).

FIG. 2J illustrates example graphics 280-288 that may be output by the example interface 200 of FIG. 2A to output visual indications of effects of the values of example voltage and wire feed speed parameters on a welding arc 216 (e.g., arc length, electrode length), a bead profile 218 (e.g., bead width, bead depth, bead concavity/convexity), and/or penetration profile 220 (e.g., penetration depth, penetration width), for an overlap type of welding joint and a wire fed welding process (e.g., GMAW, FCAW). The graphics 280-288 illustrate the welding arc 216, the bead profile 218, and the penetration profile 220 at a nominal voltage and nominal wire feed speed (graphic 280), a higher wire feed speed and a nominal voltage (graphic 282), a lower wire feed speed and a nominal voltage (graphic 284), a nominal wire feed speed and a higher voltage (graphic 286), and a nominal wire feed speed and a lower voltage (graphic 288).

As illustrated in FIGS. 2F-2J, the interface 200 may illustrate the effects of changes in wire feed speed and/or voltage on the welding arc, the bead profile, and/or the penetration profile. For example, the graphics 214, 228-234, and 250-288 may illustrate the effects of voltage on arc length, bead height, and/or bead concavity (also including convexity). The example graphics 214, 228-234, and 250-288 also illustrate the effects of wire feed speed on penetration depth.

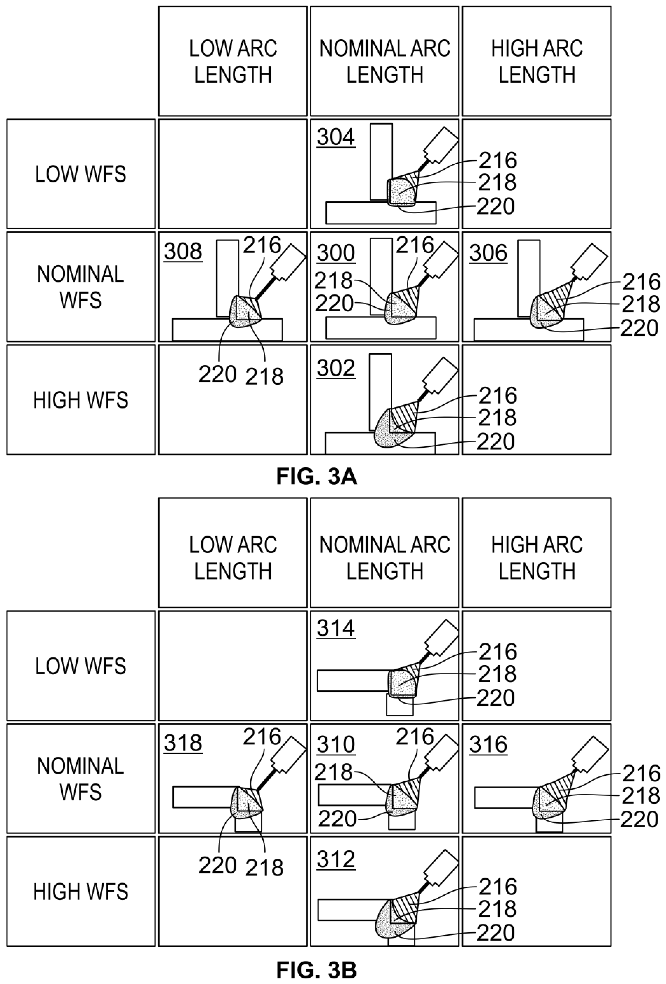

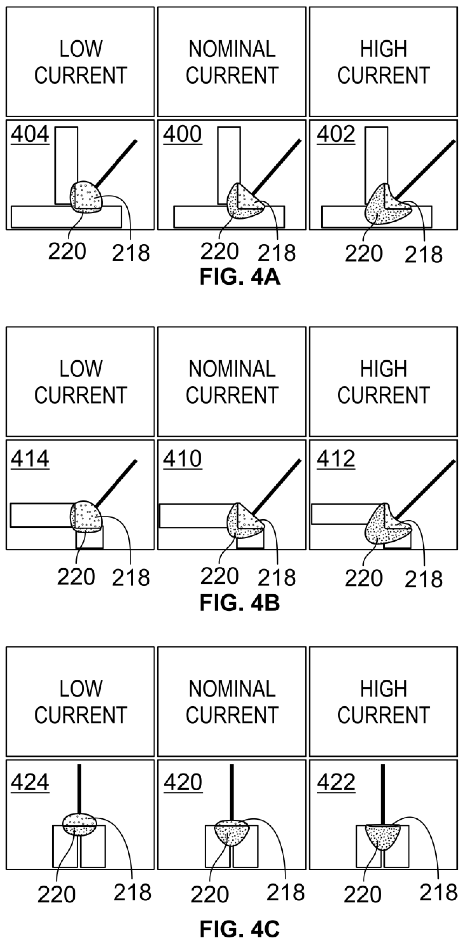

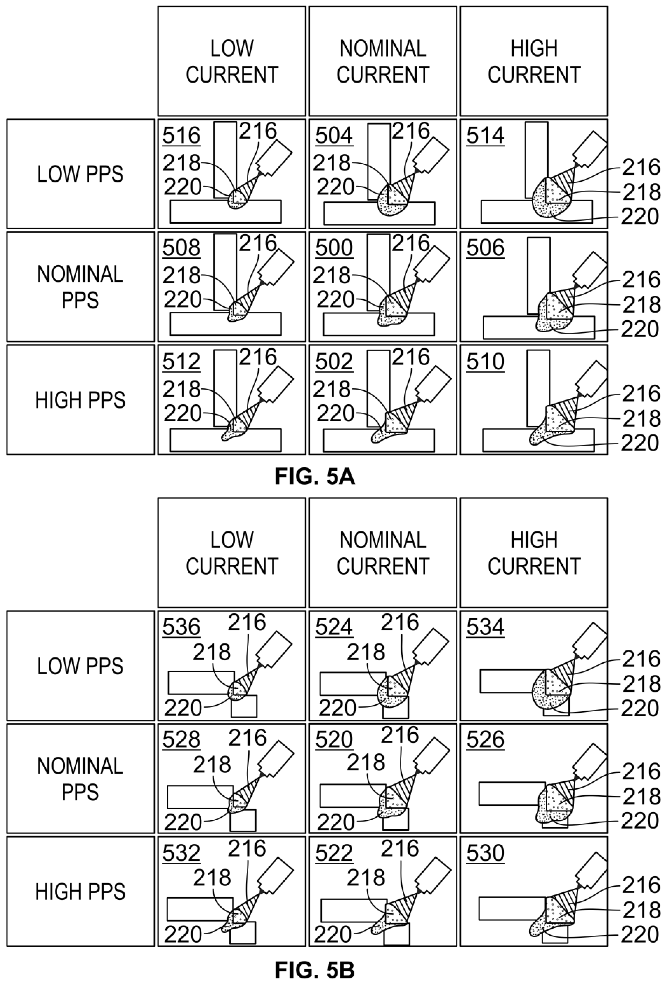

Other graphics may be displayed to illustrate the effects of relevant parameters on the welding arc, the bead profile, and/or the penetration profile for other welding processes for different joint types. FIGS. 3A-3E illustrate example collections of graphics that may be displayed on the user interface of FIG. 2A for different selected weld joints for a pulsed GMAW welding process, in response to higher, nominal, and lower values for wire feed speed and arc length parameters. FIGS. 4A-4E illustrate example collections of graphics that may be displayed on the user interface of FIG. 2A for different selected weld joints for a stick welding process, in response to higher, nominal, and lower values for a current parameter. FIGS. 5A-5E illustrate example collections of graphics that may be displayed on the user interface of FIG. 2A for different selected weld joints during a GTAW welding process, in response to higher, nominal, and lower values for current and pulse frequency parameters.

FIG. 3A illustrates example graphics 300-308 that may be output by the example interface 200 of FIG. 2A to output visual indications of effects of the values of example arc length and wire feed speed parameters on the welding arc 216 (e.g., arc length, electrode length), the bead profile 218 (e.g., bead width, bead depth, bead concavity/convexity), and/or the penetration profile 220 (e.g., penetration depth, penetration width), for a T-joint type of welding joint and a pulsed wire fed welding process (e.g., GMAW-P, FCAW). The graphics 300-308 illustrate the welding arc 216, the bead profile 218, and the penetration profile 220 at a nominal arc length and nominal wire feed speed (graphic 300), a higher wire feed speed and a nominal arc length (graphic 302), a lower wire feed speed and a nominal arc length (graphic 304), a nominal wire feed speed and a higher arc length (graphic 306), and a nominal wire feed speed and a lower arc length (graphic 308).

FIG. 3B illustrates example graphics 310-318 that may be output by the example interface 200 of FIG. 2A to output visual indications of effects of the values of example arc length and wire feed speed parameters on the welding arc 216 (e.g., arc length, electrode length), the bead profile 218 (e.g., bead width, bead depth, bead concavity/convexity), and/or the penetration profile 220 (e.g., penetration depth, penetration width), for a corner type of welding joint and a pulsed wire fed welding process (e.g., GMAW-P, FCAW). The graphics 310-308 illustrate the welding arc 216, the bead profile 218, and the penetration profile 220 at a nominal arc length and nominal wire feed speed (graphic 310), a higher wire feed speed and a nominal arc length (graphic 312), a lower wire feed speed and a nominal arc length (graphic 314), a nominal wire feed speed and a higher arc length (graphic 316), and a nominal wire feed speed and a lower arc length (graphic 318).

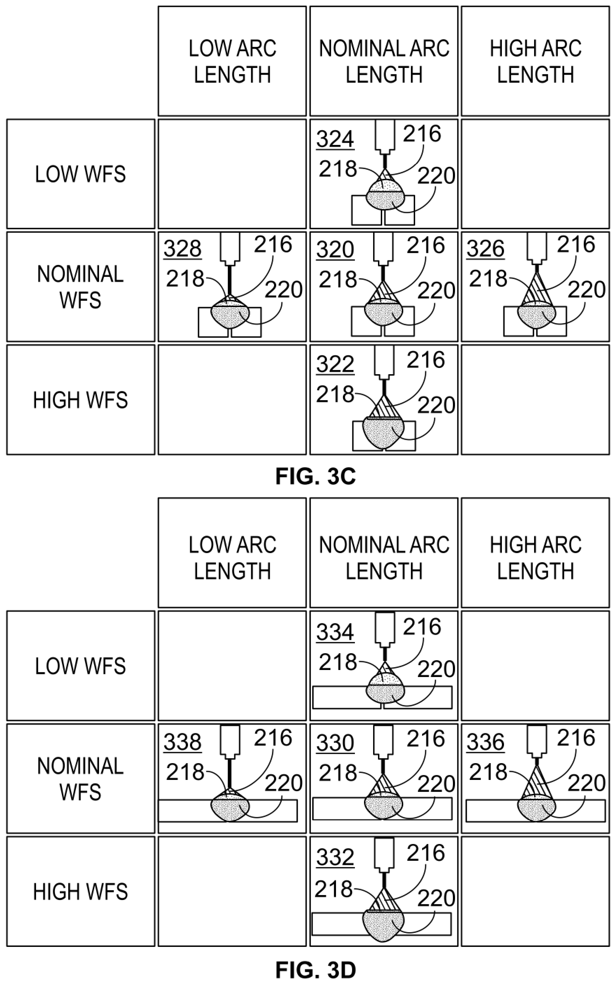

FIG. 3C illustrates example graphics 320-328 that may be output by the example interface 200 of FIG. 2A to output visual indications of effects of the values of example arc length and wire feed speed parameters on the welding arc 216 (e.g., arc length, electrode length), the bead profile 218 (e.g., bead width, bead depth, bead concavity/convexity), and/or the penetration profile 220 (e.g., penetration depth, penetration width), for a corner type of welding joint and a pulsed wire fed welding process (e.g., GMAW-P, FCAW). The graphics 320-328 illustrate the welding arc 216, the bead profile 218, and the penetration profile 220 at a nominal arc length and nominal wire feed speed (graphic 320), a higher wire feed speed and a nominal arc length (graphic 322), a lower wire feed speed and a nominal arc length (graphic 324), a nominal wire feed speed and a higher arc length (graphic 326), and a nominal wire feed speed and a lower arc length (graphic 328).

FIG. 3D illustrates example graphics 330-338 that may be output by the example interface 200 of FIG. 2A to output visual indications of effects of the values of example arc length and wire feed speed parameters on the welding arc 216 (e.g., arc length, electrode length), the bead profile 218 (e.g., bead width, bead depth, bead concavity/convexity), and/or the penetration profile 220 (e.g., penetration depth, penetration width), for a butt type of welding joint and a pulsed wire fed welding process (e.g., GMAW-P, FCAW). The graphics 330-338 illustrate the welding arc 216, the bead profile 218, and the penetration profile 220 at a nominal arc length and nominal wire feed speed (graphic 330), a higher wire feed speed and a nominal arc length (graphic 332), a lower wire feed speed and a nominal arc length (graphic 334), a nominal wire feed speed and a higher arc length (graphic 336), and a nominal wire feed speed and a lower arc length (graphic 338).

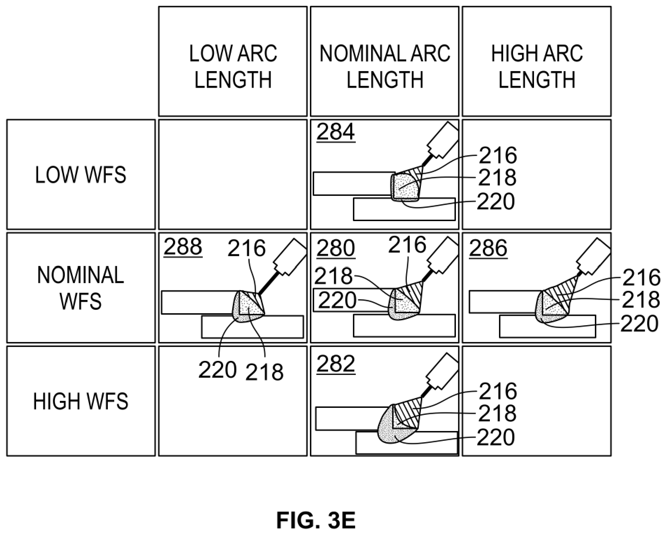

FIG. 3E illustrates example graphics 340-348 that may be output by the example interface 200 of FIG. 2A to output visual indications of effects of the values of example arc length and wire feed speed parameters on the welding arc 216 (e.g., arc length, electrode length), the bead profile 218 (e.g., bead width, bead depth, bead concavity/convexity), and/or the penetration profile 220 (e.g., penetration depth, penetration width), for an overlap type of welding joint and a pulsed wire fed welding process (e.g., GMAW-P, FCAW). The graphics 340-348 illustrate the welding arc 216, the bead profile 218, and the penetration profile 220 at a nominal arc length and nominal wire feed speed (graphic 340), a higher wire feed speed and a nominal arc length (graphic 342), a lower wire feed speed and a nominal arc length (graphic 344), a nominal wire feed speed and a higher arc length (graphic 346), and a nominal wire feed speed and a lower arc length (graphic 348).

As illustrated in FIGS. 3A-3E, the interface 200 may illustrate the effects of changes in wire feed speed and/or voltage on the welding arc, the bead profile, and/or the penetration profile. For example, the graphics 300-348 may illustrate the effects of the arc length parameter in pulsed wire-fed welding. The example graphics 300-348 also illustrate the effects of wire feed speed on bead depth and/or penetration depth in pulsed wire-fed welding.

While the example graphics 214, 228-234, and 250-288, and 300-348 of FIGS. 2A-3E illustrate changes to the welding arc 216, the bead profile 218, and the penetration profile 220 in response to increases and decreases in individual parameters, additional graphics may be provided and output by the interface 200 to represent changes caused by combinations of increases and/or decreases in multiple parameters (e.g., higher wire feed speed and higher voltage relative to nominal, higher wire feed speed and lower voltage relative to nominal, lower wire feed speed and higher voltage relative to nominal, and/or lower wire feed speed and lower voltage relative to nominal).

FIG. 4A illustrates example graphics 400-404 that may be output by the example interface 200 of FIG. 2A to output visual indications of effects of the values of example current parameters on the bead profile 218 (e.g., bead width, bead depth, bead concavity/convexity) and/or the penetration profile 220 (e.g., penetration depth, penetration width) for a T-joint type of welding joint and a stick welding process (e.g., SMAW). The graphics 400-404 illustrate the bead profile 218 and the penetration profile 220 at a nominal current (graphic 400), a higher current (graphic 402), and a lower current (graphic 404).

FIG. 4B illustrates example graphics 410-414 that may be output by the example interface 200 of FIG. 2A to output visual indications of effects of the values of example current parameters on the bead profile 218 (e.g., bead width, bead depth, bead concavity/convexity) and/or the penetration profile 220 (e.g., penetration depth, penetration width) for a corner type of welding joint and a stick welding process (e.g., SMAW). The graphics 410-414 illustrate the bead profile 218 and the penetration profile 220 at a nominal current (graphic 410), a higher current (graphic 412), and a lower current (graphic 414).

FIG. 4C illustrates example graphics 420-424 that may be output by the example interface 200 of FIG. 2A to output visual indications of effects of the values of example current parameters on the bead profile 218 (e.g., bead width, bead depth, bead concavity/convexity) and/or the penetration profile 220 (e.g., penetration depth, penetration width) for an edge type of welding joint and a stick welding process (e.g., SMAW). The graphics 420-424 illustrate the bead profile 218 and the penetration profile 220 at a nominal current (graphic 420), a higher current (graphic 422), and a lower current (graphic 424).

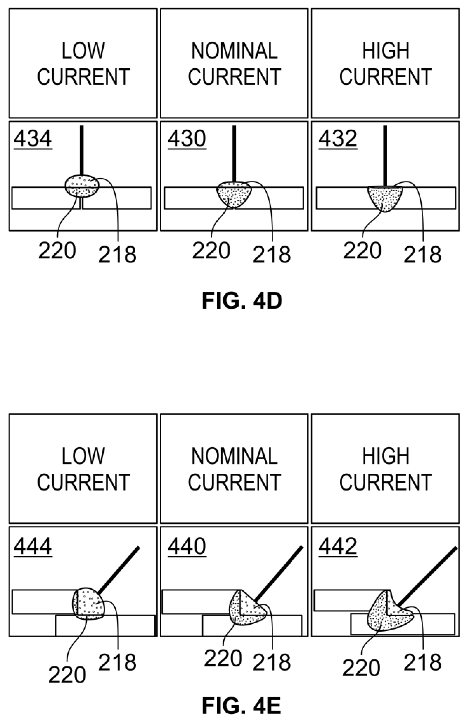

FIG. 4D illustrates example graphics 430-434 that may be output by the example interface 200 of FIG. 2A to output visual indications of effects of the values of example current parameters on the bead profile 218 (e.g., bead width, bead depth, bead concavity/convexity) and/or the penetration profile 220 (e.g., penetration depth, penetration width) for a butt type of welding joint and a stick welding process (e.g., SMAW). The graphics 430-434 illustrate the bead profile 218 and the penetration profile 220 at a nominal current (graphic 430), a higher current (graphic 432), and a lower current (graphic 434).

FIG. 4E illustrates example graphics 440-444 that may be output by the example interface 200 of FIG. 2A to output visual indications of effects of the values of example current parameters on the bead profile 218 (e.g., bead width, bead depth, bead concavity/convexity) and/or the penetration profile 220 (e.g., penetration depth, penetration width) for an overlap type of welding joint and a stick welding process (e.g., SMAW). The graphics 440-444 illustrate the welding arc 216, the bead profile 218, and the penetration profile 220 at a nominal current (graphic 440), a higher current (graphic 442), and a lower current (graphic 444).

As illustrated in FIGS. 4A-4E, the interface 200 may illustrate the effects of changes in current on the bead profile and/or the penetration profile for stick welding processes. For example, the graphics 400-444 may illustrate the effects of the current on bead concavity (including convexity), the bead depth, and/or the penetration depth.

FIG. 5A illustrates example graphics 500-516 that may be output by the example interface 200 of FIG. 2A to output visual indications of effects of the values of example pulse frequency and current parameters on the welding arc 216 (e.g., arc length, electrode length), the bead profile 218 (e.g., bead width, bead depth, bead concavity/convexity), and/or the penetration profile 220 (e.g., penetration depth, penetration width, penetration shape), for a T-joint type of welding joint and a tungsten welding process (e.g., GTAW). The graphics 500-516 illustrate the welding arc 216, the bead profile 218, and the penetration profile 220 at a nominal pulse frequency and nominal current (graphic 500), a higher pulse frequency and a nominal current (graphic 502), a lower pulse frequency and a nominal current (graphic 504), a nominal pulse frequency and a higher current (graphic 506), and a nominal pulse frequency and a lower current (graphic 508). The example graphics 500-516 further include combinations of parameters that are higher than nominal and lower than nominal, such as a higher pulse frequency and a higher current (graphic 510), a higher pulse frequency and a lower current (graphic 512), a lower pulse frequency and a higher current (graphic 514), and a lower pulse frequency and a lower current (graphic 516).

FIG. 5B illustrates example graphics 520-536 that may be output by the example interface 200 of FIG. 2A to output visual indications of effects of the values of example pulse frequency and current parameters on the welding arc 216 (e.g., arc length, electrode length), the bead profile 218 (e.g., bead width, bead depth, bead concavity/convexity), and/or the penetration profile 220 (e.g., penetration depth, penetration width, penetration shape), for a corner type of welding joint and a tungsten welding process (e.g., GTAW). The graphics 520-536 illustrate the welding arc 216, the bead profile 218, and the penetration profile 220 at a nominal pulse frequency and nominal current (graphic 520), a higher pulse frequency and a nominal current (graphic 522), a lower pulse frequency and a nominal current (graphic 524), a nominal pulse frequency and a higher current (graphic 526), and a nominal pulse frequency and a lower current (graphic 528). The example graphics 520-536 further include combinations of parameters that are higher than nominal and lower than nominal, such as a higher pulse frequency and a higher current (graphic 530), a higher pulse frequency and a lower current (graphic 532), a lower pulse frequency and a higher current (graphic 534), and a lower pulse frequency and a lower current (graphic 536).

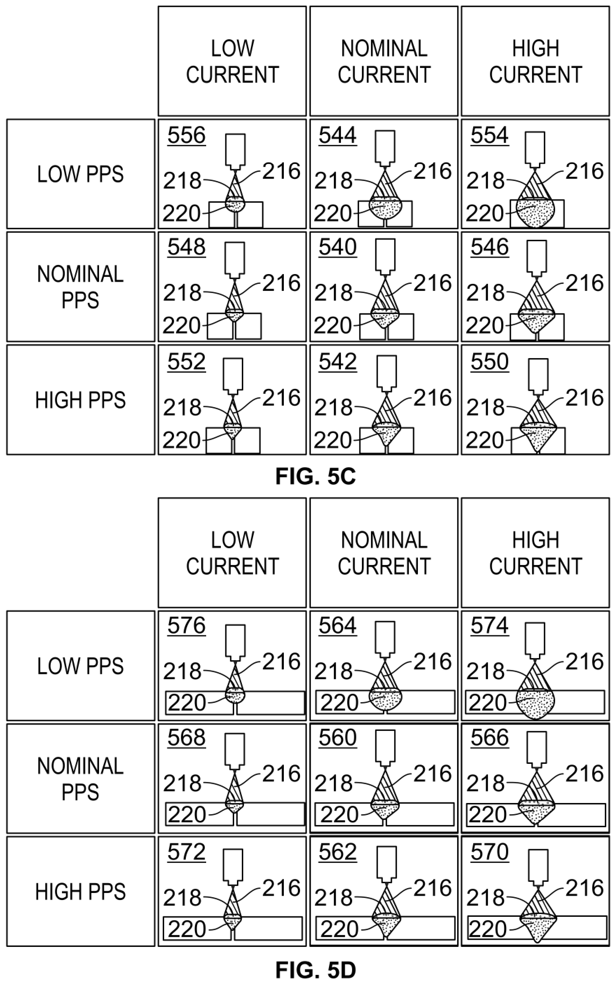

FIG. 5C illustrates example graphics 540-556 that may be output by the example interface 200 of FIG. 2A to output visual indications of effects of the values of example pulse frequency and current parameters on the welding arc 216 (e.g., arc length, electrode length), the bead profile 218 (e.g., bead width, bead depth, bead concavity/convexity), and/or the penetration profile 220 (e.g., penetration depth, penetration width, penetration shape), for an edge type of welding joint and a tungsten welding process (e.g., GTAW). The graphics 540-556 illustrate the welding arc 216, the bead profile 218, and the penetration profile 220 at a nominal pulse frequency and nominal current (graphic 540), a higher pulse frequency and a nominal current (graphic 542), a lower pulse frequency and a nominal current (graphic 544), a nominal pulse frequency and a higher current (graphic 546), and a nominal pulse frequency and a lower current (graphic 548). The example graphics 540-556 further include combinations of parameters that are higher than nominal and lower than nominal, such as a higher pulse frequency and a higher current (graphic 550), a higher pulse frequency and a lower current (graphic 552), a lower pulse frequency and a higher current (graphic 554), and a lower pulse frequency and a lower current (graphic 556).

FIG. 5D illustrates example graphics 560-576 that may be output by the example interface 200 of FIG. 2A to output visual indications of effects of the values of example pulse frequency and current parameters on the welding arc 216 (e.g., arc length, electrode length), the bead profile 218 (e.g., bead width, bead depth, bead concavity/convexity), and/or the penetration profile 220 (e.g., penetration depth, penetration width, penetration shape), for a butt type of welding joint and a tungsten welding process (e.g., GTAW). The graphics 560-576 illustrate the welding arc 216, the bead profile 218, and the penetration profile 220 at a nominal pulse frequency and nominal current (graphic 560), a higher pulse frequency and a nominal current (graphic 562), a lower pulse frequency and a nominal current (graphic 564), a nominal pulse frequency and a higher current (graphic 566), and a nominal pulse frequency and a lower current (graphic 568). The example graphics 560-576 further include combinations of parameters that are higher than nominal and lower than nominal, such as a higher pulse frequency and a higher current (graphic 570), a higher pulse frequency and a lower current (graphic 572), a lower pulse frequency and a higher current (graphic 574), and a lower pulse frequency and a lower current (graphic 576).

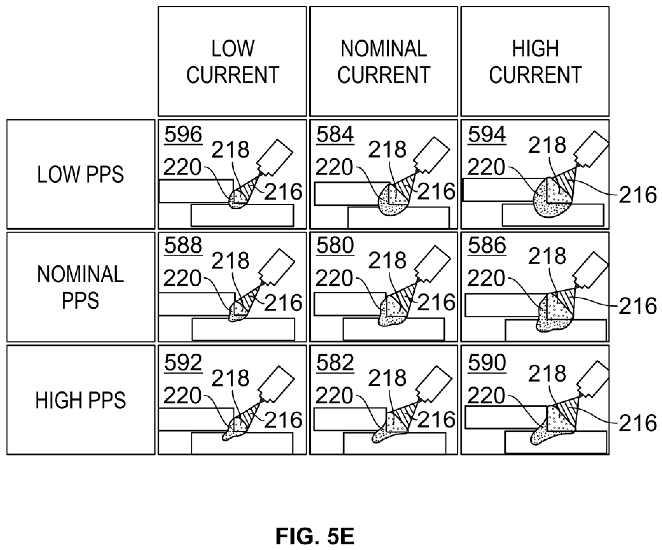

FIG. 5E illustrates example graphics 580-596 that may be output by the example interface 200 of FIG. 2A to output visual indications of effects of the values of example pulse frequency and current parameters on the welding arc 216 (e.g., arc length, electrode length), the bead profile 218 (e.g., bead width, bead depth, bead concavity/convexity), and/or the penetration profile 220 (e.g., penetration depth, penetration width, penetration shape), for an overlap type of welding joint and a tungsten welding process (e.g., GTAW). The graphics 560-576 illustrate the welding arc 216, the bead profile 218, and the penetration profile 220 at a nominal pulse frequency and nominal current (graphic 560), a higher pulse frequency and a nominal current (graphic 562), a lower pulse frequency and a nominal current (graphic 564), a nominal pulse frequency and a higher current (graphic 566), and a nominal pulse frequency and a lower current (graphic 568). The example graphics 560-576 further include combinations of parameters that are higher than nominal and lower than nominal, such as a higher pulse frequency and a higher current (graphic 570), a higher pulse frequency and a lower current (graphic 572), a lower pulse frequency and a higher current (graphic 574), and a lower pulse frequency and a lower current (graphic 576).

As illustrated in FIGS. 5A-5E, the interface 200 may illustrate the effects of changes in current on the bead profile and/or the penetration profile for stick welding processes. For example, the graphics 500-596 may illustrate the effects of the current parameter on penetration depth and/or bead width. The graphics 500-596 may also illustrate the effects of pulse frequency penetration shape.

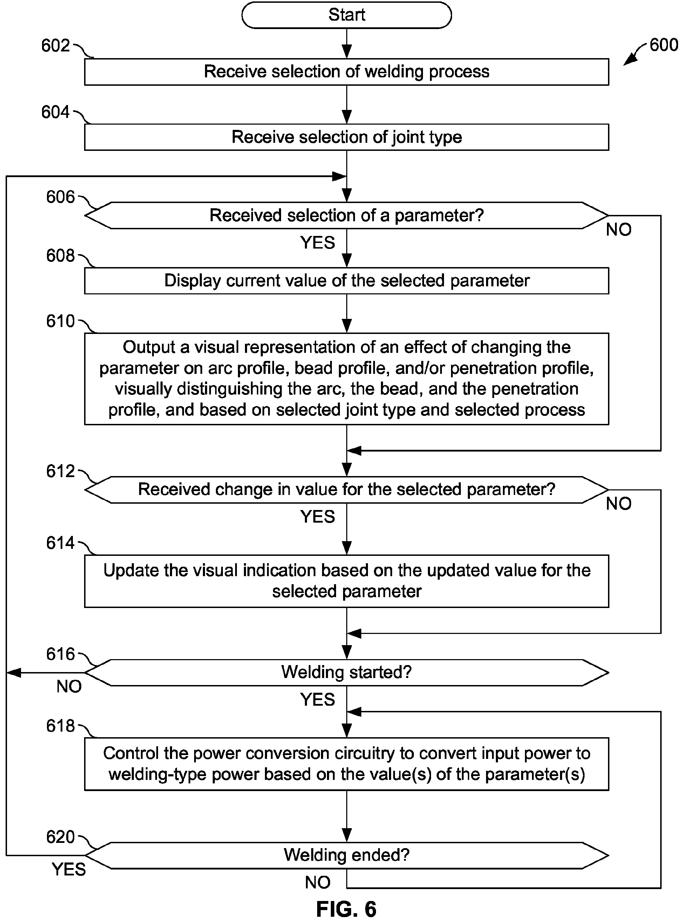

FIG. 6 is a flowchart illustrating example machine readable instructions 600 which may be executed by the welding-type power supply 102 and/or the remote interface 104 of FIG. 1 to output a visual indication of the effects of the selected parameter and/or selected value. The example instructions 600 are described below with reference to the power supply 102 and the interface 200 of FIGS. 2A and 2B.

At block 602, the control circuitry 112 receives a selection of a welding process. For example, the user interface 200 may prompt the user to select from one or more wire fed processes (e.g., GMAW, FCAW), one or more modified wire fed processes (e.g., pulsed GMAW, modified short circuit GMAW, etc.), a stick welding process (e.g., SMAW), one or more tungsten electrode welding processes (e.g., DC GTAW welding, AC GTAW welding, pulsed GTAW welding, etc.), and/or any other welding process supported by the power supply 102.

At block 604, the control circuitry 112 receives a selection of a joint type to be welded. Example joint types include T-joint types, corner types, edge types, butt types, and/or overlap types. In some examples, the selection of the joint type further includes a selection of a welding position (e.g., flat, horizontal, vertical, overhead, pipe, etc.).

At block 606, the control circuitry 112 determines whether a selection of a parameter has been received (e.g., via the user interface 200 of FIGS. 2A and 2B). For example, the user of the power supply 102 may select a parameter via the user interface 200 for adjustment. If a parameter has been selected (block 606), at block 608 the control circuitry 112 displays a current value of the selected parameter.

At block 610, the control circuitry 112 determines and outputs a visual representation of an effect of changing the parameter on arc profile, bead profile, and/or penetration profile, and based on the selected joint type and the selected process. The visual representation visually distinguishes the arc (e.g., the welding arc 216 of FIGS. 2A-5E), the bead (e.g., the bead profile 218 of FIGS. 2A-5E), and the penetration profile (e.g., the penetration profile 220 of FIGS. 2A-5E). For example, the control circuitry 112 may look up the effects of the value of the selected parameter in a look up table or algorithmically calculate one or more effects based on predetermined relationships between the parameter values and the effects. The effects may be based solely on the value of the parameter, or further based on selected values of one or more other parameters in combination with the selected value of the parameter. For example, voltage or arc length, wire feed speed, amperage, pulse frequency, and/or other parameters may determine or affect the arc length, arc width, electrode length, bead width, bead depth, penetration depth, penetration width, and/or other aspects of the resulting weld.

Example parameters that may be selected (block 606) and/or used in combination with the selected parameter include a welding mode, a welding polarity, welding voltage, arc length, a wire feed speed setting a tungsten electrode diameter, a tungsten electrode stickout length, a gas cup size, a shielding gas flow rate, a torch angle, an amperage setting, an AC balance, an AC frequency, a mixed AC-DC welding ratio, an AC waveshape, an AC commutation level, an EN amperage of an AC waveform, an EP amperage of the AC waveform, an amperage ratio of an AC waveform, a pulse frequency, a pulse peak phase time, a pulse background phase amperage, a pulse background percentage of a pulse cycle, a pulse waveform, a pulse transition rate, a pulse-on-pulse setting, and/or a pulse-on-pulse ratio. In some examples, such as applications involving robotic control of the welding torch, additional parameters that may be considered include a travel speed, a weave pattern, a travel angle, a work angle, a tungsten to work distance, a wire preheating power, a wire preheating voltage, a wire preheating current, a wire preheating enthalpy, a wire oscillation speed, a wire oscillation pattern, a wire feed location relative to a weld puddle, a workpiece material, a workpiece thickness, or a wire feed orientation relative to the weld puddle.

After outputting the visual indication (block 610), and/or if a selection of a parameter has not been received (block 606), at block 612 the control circuitry 112 determines whether a change in the value of a currently selected parameter has been received. For example, a user may adjust the value of a currently selected parameter via the knob 212a, 212b of FIGS. 2A and 2B and/or via another input device. If a change in the value of a currently selected parameter has been received (block 612), at block 614 the control circuitry 112 updates the visual indication (e.g., the graphics 214, 228) based on the updated value for the selected parameter.

After updating the visual indication (block 614), or if a change in the value of the parameter has not been received (block 612), at block 616 the control circuitry 112 determines whether welding has started. For example, the control circuitry 112 may detect an input device (e.g., a trigger, a foot pedal, etc.), welding-type current being output from the power conversion circuitry, and/or an output voltage from the power conversion circuitry that is within a welding voltage range.

If welding has started (block 616), at block 618 the control circuitry 112 controls the power conversion circuitry 110 to convert input power to welding-type power based on the value(s) of the parameter(s). At block 620, the control circuitry 112 determines whether welding has ended. For example, the control circuitry 112 may determine whether the input device (e.g., the foot pedal) has been released, and/or whether the output voltage and/or output amperage indicate that the arc is no longer present. If welding has not ended (block 620), control returns to block 618 to continue controlling the power conversion circuitry 110.

When welding has ended (block 620) or welding is not started (block 616), control returns to block 606 to monitor for a change in the selected parameter(s) and/or changes in the value(s).

The present methods and systems may be realized in hardware, software, and/or a combination of hardware and software A typical combination of hardware and software may include one or more application specific integrated circuits and/or chips. Some implementations may comprise a non-transitory machine-readable (e.g., computer readable) medium (e.g., FLASH memory, optical disk, magnetic storage disk, or the like) having stored thereon one or more lines of code executable by a machine, thereby causing the machine to perform processes as described herein. As used herein, the term "non-transitory machine-readable medium" is defined to include all types of machine readable storage media and to exclude propagating signals.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.
Certain embodiments of the invention are described in the following clauses:
Clause 1. A welding-type system, comprising:
   power conversion circuitry configured to convert input power to welding-type power;
   an interface configured to receive a selection of a value for a parameter of a plurality of parameters; and
   control circuitry configured to:
      in response to the selection of the value of the parameter via the interface, control the interface to output a visual indication of an effect of the value of the parameter on one or more of arc length, electrode length, bead width, bead depth, penetration depth, or penetration width, the visual indication further based on a joint type, and the visual indication including different visual effects for each of the arc, the bead, and the penetration; and
   control the power conversion circuitry based on values of the plurality of parameters.
Clause 2. The welding-type system as defined in clause 1, wherein the interface is configured to receive a selection of welding processes from at least a wire-fed process, a pulsed wire-fed process, a stick welding process, or a tungsten electrode process.
Clause 3. The welding-type system as defined in clause 2, wherein the interface is configured to set the plurality of parameters to include voltage and wire feed speed in response to selection of the wire-fed process via the interface.
Clause 4. The welding-type system as defined in clause 3, wherein the control circuitry is configured to control the interface to output the visual indication of the effect of the value of the voltage on at least arc length, bead height, and bead concavity.
Clause 5. The welding-type system as defined in clause 3, wherein the control circuitry is configured to control the interface to output the visual indication of the effect of the value of the wire feed speed on at least the penetration depth.
Clause 6. The welding-type system as defined in clause 2, wherein the interface is configured to set the plurality of parameters to include arc length and wire feed speed in response to selection of the pulsed wire-fed process via the interface.
Clause 7. The welding-type system as defined in clause 6, wherein the control circuitry is configured to control the interface to output the visual indication of the effect of the value of the arc length on at least arc length and electrode length.
Clause 8. The welding-type system as defined in clause 6, wherein the control circuitry is configured to control the interface to output the visual indication of the effect of the value of the wire feed speed on at least the bead depth and the penetration depth.
Clause 9. The welding-type system as defined in clause 2, wherein the interface is configured to set the plurality of parameters to include current in response to selection of the stick welding process via the interface.
Clause 10. The welding-type system as defined in clause 9, wherein the control circuitry is configured to control the interface to output the visual indication of the effect of the value of the current on at least a bead concavity, the bead depth, and the penetration depth.
Clause 11. The welding-type system as defined in clause 2, wherein the interface is configured to set the plurality of parameters to include current and pulse frequency in response to selection of the tungsten electrode process.
Clause 12. The welding-type system as defined in clause 11, wherein the control circuitry is configured to control the interface to output the visual indication of the effect of the value of the current on at least the penetration depth and the bead width.
Clause 13. The welding-type system as defined in clause 11, wherein the control circuitry is configured to control the interface to output the visual indication of the effect of the value of the pulse frequency on at least penetration shape.
Clause 14. The welding-type system as defined in clause 1, wherein the visual indication comprises a graphic.
Clause 15. The welding-type system as defined in clause 1, wherein the visual indication comprises text.
Clause 16. The welding-type system as defined in clause 1, wherein the interface is configured to receive a change in the value for the parameter, and the control circuitry is configured to control the interface to output the visual indication of the effect based on the change in the value of the parameter.
Clause 17. A welding interface, comprising:
   a display;
   one or more input devices configured to:
      receive a selection of a value for a parameter from a plurality of parameters; and control circuitry configured to:
      in response to the selection of the value via the one or more input devices, control the display to output a visual indication of an effect of the value of the parameter on one or more of arc length, electrode length, bead width, bead depth, penetration depth, or penetration width, the visual indication further based on a joint type.
Clause 18. The welding interface as defined in clause 17, wherein the one or more input devices are configured to receive a selection of welding processes from at least a wire-fed process, a pulsed wire-fed process, a stick welding process, or a tungsten electrode process.
Clause 19. The welding interface as defined in clause 17, wherein the visual indication comprises a graphic.
Clause 20. The welding interface as defined in clause 17, wherein the one or more input devices are configured to receive a change in the value for the parameter, and the control circuitry is configured to control the display to output the visual indication of the effect based on the change in the value of the parameter.

## Claims

1. A welding-type system, comprising:
power conversion circuitry configured to convert input power to welding-type power;
an interface configured to receive a selection of a value for a parameter of a plurality of parameters; and
control circuitry configured to:
in response to the selection of the value of the parameter via the interface, control the interface to output a visual indication of an effect of the value of the parameter on one or more of arc length, electrode length, bead width, bead depth, penetration depth, or penetration width, the visual indication further based on a joint type, and the visual indication including different visual effects for each of the arc, the bead, and the penetration; and
control the power conversion circuitry based on values of the plurality of parameters.

2. The welding-type system as defined in claim 1, wherein the interface is configured to receive a selection of welding processes from at least a wire-fed process, a pulsed wire-fed process, a stick welding process, or a tungsten electrode process.

3. The welding-type system as defined in claim 2, wherein the interface is configured to set the plurality of parameters to include voltage and wire feed speed in response to selection of the wire-fed process via the interface.

4. The welding-type system as defined in claim 3, wherein the control circuitry is configured to control the interface to output the visual indication of the effect of the value of the voltage on at least arc length, bead height, and bead concavity.

5. The welding-type system as defined in claim 3, wherein the control circuitry is configured to control the interface to output the visual indication of the effect of the value of the wire feed speed on at least the penetration depth.

6. The welding-type system as defined in claim 2, wherein the interface is configured to set the plurality of parameters to include arc length and wire feed speed in response to selection of the pulsed wire-fed process via the interface.

7. The welding-type system as defined in claim 6, wherein the control circuitry is configured to control the interface to output the visual indication of the effect of the value of the arc length on at least arc length and electrode length or wherein the control circuitry is configured to control the interface to output the visual indication of the effect of the value of the wire feed speed on at least the bead depth and the penetration depth.

8. The welding-type system as defined in claim 2, wherein the interface is configured to set the plurality of parameters to include current in response to selection of the stick welding process via the interface and optionally wherein the control circuitry is configured to control the interface to output the visual indication of the effect of the value of the current on at least a bead concavity, the bead depth, and the penetration depth.

9. The welding-type system as defined in claim 2, wherein the interface is configured to set the plurality of parameters to include current and pulse frequency in response to selection of the tungsten electrode process.

10. The welding-type system as defined in claim 9, wherein the control circuitry is configured to control the interface to output the visual indication of the effect of the value of the current on at least the penetration depth and the bead width, or wherein the control circuitry is configured to control the interface to output the visual indication of the effect of the value of the pulse frequency on at least penetration shape.

11. The welding-type system as defined in claim 1, wherein the visual indication comprises a graphic or wherein the visual indication comprises text.

12. The welding-type system as defined in claim 1, wherein the interface is configured to receive a change in the value for the parameter, and the control circuitry is configured to control the interface to output the visual indication of the effect based on the change in the value of the parameter.

13. A welding interface, comprising:
a display;
one or more input devices configured to:
receive a selection of a value for a parameter from a plurality of parameters; and control circuitry configured to:
in response to the selection of the value via the one or more input devices, control the display to output a visual indication of an effect of the value of the parameter on one or more of arc length, electrode length, bead width, bead depth, penetration depth, or penetration width, the visual indication further based on a joint type.

14. The welding interface as defined in claim 13, wherein the one or more input devices are configured to receive a selection of welding processes from at least a wire-fed process, a pulsed wire-fed process, a stick welding process, or a tungsten electrode process, or wherein the visual indication comprises a graphic.

15. The welding interface as defined in claim 13, wherein the one or more input devices are configured to receive a change in the value for the parameter, and the control circuitry is configured to control the display to output the visual indication of the effect based on the change in the value of the parameter.
